(19) Europäisches Patentamt European Patent Office Office européen des brevets

(11) **EP 3 195 442 B1**

(12) **EUROPÄISCHE PATENTSCHRIFT**

(45) Veröffentlichungstag und Bekanntmachung des Hinweises auf die Patenterteilung:
**19.06.2019   Patentblatt 2019/25**

(21) Anmeldenummer: **15747807.4**

(22) Anmeldetag: **05.08.2015**

(51) Int Cl.:
*H02J 3/38* (2006.01)        *F03D 7/04* (2006.01)
*F03D 9/00* (2016.01)        *H02J 3/48* (2006.01)
*H02J 3/50* (2006.01)        *H02M 7/44* (2006.01)

(86) Internationale Anmeldenummer:
**PCT/EP2015/068098**

(87) Internationale Veröffentlichungsnummer:
**WO 2016/041692 (24.03.2016 Gazette 2016/12)**

(54) **VERFAHREN UND VORRICHTUNG ZUM BETRIEB EINES NEBEN EINEM NETZBILDNER UND MINDESTENS EINER LAST AN EIN BEGRENZTES WECHSELSTROMNETZ ANGESCHLOSSENEN KRAFTWERKS FLUKTUIERENDER LEISTUNGSFÄHIGKEIT**

METHOD AND APPARATUS FOR THE OPERATION OF A POWER STATION OF FLUCTUATING PERFORMANCE CONNECTED, BESIDES A SYSTEM FORMER AND AT LEAST ONE LOAD, TO A LIMITED AC SYSTEM

PROCÉDÉ ET DISPOSITIF POUR FAIRE FONCTIONNER UNE CENTRALE ÉLECTRIQUE À RENDEMENT ÉLECTRIQUE FLUCTUANT QUI EST RELIÉ À UN RÉSEAU À COURANT ALTERNATIF LIMITÉ EN PLUS D'UN GÉNÉRATEUR DE RÉSEAU ET D'AU MOINS UNE CHARGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2014   DE 102014113262**

(43) Veröffentlichungstag der Anmeldung:
**26.07.2017   Patentblatt 2017/30**

(73) Patentinhaber: **SMA Solar Technology AG**
**34266 Niestetal (DE)**

(72) Erfinder:
• **PREMM, Daniel**
**34260 Kaufungen (DE)**
• **MENDE, Denis**
**37247 Grossalmerode (DE)**
• **SCHUETZ, Christian**
**34393 Grebenstein (DE)**

(56) Entgegenhaltungen:
**EP-A1- 1 959 534        EP-A1- 2 503 146**
**WO-A1-02/21661        WO-A2-2014/009223**

• **MENDIS ET AL: "A Novel Control Strategy for Stand-alone Operation of a Wind Dominated RAPS System", 2011 IEEE INDUSTRY APPLICATIONS SOCIETY ANNUAL MEETING, 12386358, 13. Oktober 2011 (2011-10-13), Seiten 1-8, XP002744601, Piscataway, NJ, USA ISSN: 0197-2618, DOI: 10.1109/ias.2011.6074359 ISBN: 978-1-4244-9498-9**

**Beschreibung**

## TECHNISCHES GEBIET DER ERFINDUNG

Die Erfindung bezieht sich auf ein Verfahren zum Betrieb eines Kraftwerks fluktuierender elektrischer Leistungsfähigkeit, das neben einem Wirkleistung und Blindleistung abgebenden spannungsstellenden Netzbildner und mindestens einer Last an ein begrenztes Wechselstromnetz angeschlossen ist. Dabei dient der Betrieb des Kraftwerks vielfach dem Zweck, durch Einspeisung von Leistung von dem Kraftwerk einen Kraftstoffverbrauch eines oder mehrerer Brennkraftgeneratoren zu reduzieren, die als Netzbildner oder weitere Leistungsquellen in dem begrenzten Wechselstromnetz dienen.

Das Kraftwerk fluktuierender elektrischer Leistungsfähigkeit kann insbesondere ein Photovoltaikkraftwerk, aber beispielsweise auch ein Wind-, Gezeiten- oder Blockheizkraftwerk sein. Die Angabe "fluktuierend" zur Leistungsfähigkeit des Kraftwerks bedeutet dabei, dass seine Leistungsfähigkeit, d. h. seine aktuelle Fähigkeit zur Abgabe elektrischer Leistung, durch externe Parameter wie Sonneneinstrahlung, Windaufkommen, Gezeitenhub, Wärmebedarf usw. bestimmt wird und dadurch schwankt, und zwar unabhängig vom aktuellen Leistungsbedarf in einem begrenzten Wechselstromnetz, an das das Kraftwerk angeschlossen ist.

Bei dem begrenzten Wechselstromnetz handelt es sich insbesondere um ein sogenanntes Inselnetz, das keine Verbindung zu einem übergeordneten stabilisierenden Wechselstromnetz aufweist. Der an das Wechselstromnetz angeschlossene Netzbildner kann aber grundsätzlich auch eine Verbindung begrenzter Leistung zu einem übergeordneten Wechselstromnetz aufweisen. Das begrenzte Wechselstromnetz weist demnach maximal eine Verbindung begrenzter Leistung zu einem übergeordneten Wechselstromnetz auf. Vielfach wird es sich bei dem Netzbildner um einen dauerhaft aktivierten Brennkraftgenerator handeln, der eine konstante Leistungsfähigkeit in Höhe seiner Nenn- oder Maximalleistung aufweist. Die Ausbildung des Netzbildners ist alternativ auch durch einen Wasserkraftgenerator oder einen Batterieinverter möglich.

Je nach Leistungsbedarf der an das Wechselstromnetz angeschlossenen Lasten wird zusätzlich zu dem Netzbildner häufig mindestens eine weitere Leistungsquelle, insbesondere ein Brennkraftgenerator, von einer Leistungsquellensteuerung bei Bedarf aktiviert. Typischerweise sind mehrere weitere Leistungsquellen vorhanden, die je nach Bedarf in steigender Anzahl von der Leistungsquellensteuerung aktiviert werden. Dabei hält die Leistungsquellensteuerung eine Reserveleistung vor, damit die derzeit aktivierten Leistungsquellen mit einer erhöhten Leistungsabgabe auf kurzfristige Anstiege bei der Leistungsaufnahme der Lasten oder auf eine zusätzlichen Leistungsaufnahme durch Aktivierung zusätzlicher Lasten reagieren können. Durch Aktivierung zusätzlicher Brennkraftgeneratoren kann solchen schnellen Anstiegen der Leistungsaufnahme nicht begegnet werden.

Bei jeder Schwankung der Leistungsaufnahme der Lasten kommt insbesondere allen spannungsstellenden Netzbildnern die Aufgabe zu, die Netzwechselspannung auf dem Wechselstromnetz stabil, d. h. bezüglich Amplitude und Frequenz möglichst konstant zu halten.

Das Kraftwerk fluktuierender elektrischer Leistungsfähigkeit reduziert den Kraftstoffbedarf aller an das begrenzte Wechselstromnetz als Leistungsquellen angeschlossenen Brennkraftgeneratoren und jeden anderen nicht durch regenerative Energiequellen gedeckten Energiebedarf anderer an das begrenzte Wechselstromnetz angeschlossener Leistungsquellen, indem es einen Teil der Leistungsaufnahme der angeschlossenen Lasten abdeckt. Dabei ist darauf zu achten, dass das Kraftwerk fluktuierender elektrischer Leistungsfähigkeit mit seiner Einspeisung von Leistung in das Wechselstromnetz nicht zu einer Destabilisierung des Wechselstromnetzes führt. So kann eine unkontrollierte Einspeisung von Leistung von dem Kraftwerk zum Beispiel zu einer Einspeisung von Leistung in aktivierte Brennkraftgeneratoren führen, was in der Regel eine Notabschaltung derselben zur Folge hat. Hierdurch kann das gesamte Wechselstromnetz zusammenbrechen.

Bei als Leistungsquellen an das Wechselstromnetz angeschlossenen Brennkraftgeneratoren handelt es sich typischerweise um Dieselgeneratoren, wenn auch andere Kombinationen einer Brennkraftmaschine und eines Generators, die hier kurz als Brennkraftgeneratoren bezeichnet werden, möglich sind. Dieselgeneratoren weisen bei passender Ausnutzung zwar einen guten Wirkungsgrad und eine gute Kosteneffizienz auf, benötigen aber einige Sekunden, bis sie soweit aktiviert sind, dass sie Leistung in das Wechselstromnetz einspeisen können. Die beispielsweise von Photovoltaikkraftwerken eingespeiste elektrische Leistung kann grundsätzlich schneller variiert werden, auch schneller als bei einem bereits aktivierten Brennkraftgenerator, der mit erheblichen mechanischen Trägheitsmomenten behaftet ist.

## STAND DER TECHNIK

Ein Verfahren zum Betrieb eines Photovoltaikkraftwerks, um durch Einspeisung von Leistung von dem Photovoltaikkraftwerk einen Kraftstoffverbrauch eines Dieselgenerators zu reduzieren, wird auf der Website www.donauer. eu der Donauer Solartechnik Vertriebs GmbH beschrieben. Dabei soll ein sogenanntes DONAUER Dieselhybridenergiemanagement eine stabile, wirtschaftliche und nachhaltige Energieversorgung sicherstellen, ohne dass Batterien als Zwischenspeicher für elektrische Energie benötigt werden, indem ein Dieselgenerator immer in einem optimalen Betriebspunkt mit effizienter Kraftstoffverbrennung betrieben wird. Nähere Informationen dazu, wie dies erreicht werden soll, finden sich jedoch nicht.

Aus der DE 10 2011 103 600 A1 ist ein Verfahren zum Steuern einer Anlage oder Maschine zwecks optimaler Ausnutzung einer Energiequelle bekannt. Dabei ist die Anlage oder Maschine aus einem Photovoltaikkraftwerk versorgbar. Der zeitliche Verlauf der Leistung des Photovoltaikkraftwerks wird prognostiziert, wobei eine Bewölkungsprognose satellitengestützt erstellt wird. Die Anlage oder Maschine wird dann derart gesteuert, dass sie einen Prozess ausführt, der zu einem Startzeitpunkt begonnen wird, an dem zumindest ein möglichst großer Teil der für den Prozess benötigten Leistung von dem Photovoltaikkraftwerk erzeugt wird.

Aus der DE 10 2010 046 744 A1 ist ein Verfahren für ein lastgeführtes Photovoltaikkraftwerk im Inselbetrieb bekannt. Aus einer ersten Energiequelle bestehend aus einer Anordnung von Photovoltaikmodulen und aus einer zweiten Energiequelle wird in einen Gleichstromeingang eines Inselwechselrichters eingespeist, der an seinem Ausgang eine Wechselstromlast versorgt. Dabei erfolgt der Eintrag von elektrischer Energie alleine mit der ersten Energiequelle, solange ein Maximal-Power-Point auf der Strom-Spannungs-Kennlinie der Photovoltaikmodule noch nicht erreicht ist. Beim Erreichen des Maximal-Power-Points und einer weiteren Verbrauchslasterhöhung der Wechselstromlast werden die Photovoltaikmodule weiterhin am Maximal-Power-Point betrieben, und der für die vollständige Energieversorgung der Wechselstromlast fehlende Energieeintrag erfolgt durch die zweite Energiequelle. Diese zweite Energiequelle kann von einem öffentlichen Stromversorgungsnetz oder von einem Brennkraftgenerator gebildet sein.

Aus der DE 10 2011 106 877 A1 ist eine Anordnung mit einem Photovoltaikgenerator bekannt, der an die Eingangsklemmen eines Wechselrichters anschließbar ist. Der Ausgang des Wechselrichters ist mit einem Versorgungsnetz verbunden. Die Anordnung umfasst weiterhin eine parallel zu dem Ausgang des Wechselrichters geschaltete Asynchronmaschine, die von einem Verbrennungsmotor angetrieben wird. Ziel der Anordnung ist es, den Einsatz von gegenüber Synchronmaschinen billigen Asynchronmaschinen zu ermöglichen, deren ungünstiger Wirkfaktor cos phi durch eine Blindleistungsregelung mit elektronisch geregelten IGBT des Wechselrichters kompensiert wird. Als Netzbildner ist ein Brennkraftgenerator mit direkt an ein Wechselstromnetz angebundener Asynchronmaschine nicht geeignet. Zur Überbrückung des Zeitraums zwischen einem Zeitpunkt, zu dem Leistung von der Synchronmaschine seitens des Betreibers des Versorgungsnetzes angefordert wird, und dem Zeitpunkt, ab dem die Asynchronmaschine die angeforderte Leistung nach Starten des Verbrennungsmotors tatsächlich bereitstellt, ist daher eine Batterie vorgesehen, die dem Eingang des Wechselrichters zuschaltbar ist.

Aus der EP 1 323 222 B1 ist ein Verfahren zum Betrieb eines Inselnetzes mit wenigstens einem ersten Energieerzeuger in Form einer Windkraftanlage, einer Synchronmaschine als Netzbildner sowie einem elektrischen Element als Zwischenspeicher bekannt. Das Windkraftwerk wird derart geregelt, dass es stets nur die benötigte elektrische Leistung erzeugt, die sich aus dem Verbrauch der elektrischen Leistung im Netz sowie dem Leistungsbedarf zum Aufladen des elektrischen Elements als Zwischenspeicher zusammensetzt. Ein Verbrennungsmotor, der die Synchronmaschine über eine Kupplung antreiben kann, wird nur dann aktiviert, wenn die von der Windkraftanlage und/oder von dem elektrischen Zwischenspeicher abgegebene Leistung einen vorgebbaren Schwellwert für einen vorgebbaren Zeitabschnitt unterschreitet. Wenn der Verbrennungsmotor nicht aktiviert ist, arbeitet die Synchronmaschine im Motorbetrieb, wobei sie ihre Antriebsenergie von der Windkraftanlage bezieht. Die Synchronmaschine ist nicht nur Netzbildner, sondern auch Blindleistungs- und Kurzschlussstromerzeuger, Flickerfilter und Spannungsregler des Inselnetzes.

Aus der US 2008/0278003 A1 ist ein System zur unterbrechungsfreien Stromversorgung einer Last bekannt, das eine regenerative Energiequelle in Form eines Photovoltaikkraftwerks und einer Batterie als Speicher für elektrische Energie aufweist. Das System erhält die Versorgung der Last aufrecht, wenn ein Wechselstromnetz ausfällt, insbesondere bis ein Brennkraftgenerator als Ersatzversorgung aktiviert ist.

Aus C.A. Hernandez-Aramburo et al.: Fuel Consumption Minimization of a Microgrid", IEEE Transactions on Industry Applications, Vol. 41, No. 3, S. 673-681, Mai/Juni 2005, ist ein Verfahren zum Betrieb von Photovoltaikgeneratoren und Windgeneratoren bekannt, die neben einem Netzbildner, mindestens einem Brennkraftgenerator, welcher von einer Generatorsteuerung bedarfsweise aktiviert oder deaktiviert wird, und mindestens einer Last an ein begrenztes Wechselstromnetz angeschlossen sind. Ein Kostenoptimierungsmodell mit der Nebenbedingung, dass eine aktuell in dem Wechselstromnetz verfügbare Reserveleistung einen Mindestwert einhält, setzt die von Photovoltaikgeneratoren und Windgeneratoren verfügbare Leistung zu 80 % bzw. 40 % ihrer Nennleistung an. Zur Bereitstellung eines ansteigenden Leistungsbedarfs werden zunächst die ohne Brennstoff auskommenden Photovoltaikgeneratoren und Windgeneratoren bis auf ihre aktuellen Maximalleistungen hochgefahren. Zur Bereitstellung von Reserveleistung und zur Abdeckung von nicht mehr ohne Brennstoff abdeckbarem Leistungsbedarf werden dann Brennkraftgeneratoren in für den jeweiligen Leistungsbedarf kostenoptimierter Kombination zugeschaltet. Die Leistungen der Photovoltaikgeneratoren und Windgeneratoren bleiben dabei auf ihren aktuellen Maximalleistungen stehen.

In Mendis et al. : "A Novel Control Strategy for Stand-Alone Operation of a Wind Dominated RAPS System", 2011 IEEE Industry Application Society Annual Meeting, wird eine Kontrollstrategie offenbart, mit der Spannung und Frequenz eines abgelegenen Netzabschnitts mit Leistungseinspeisung vorwiegend aus Windkraft durch Ausgleich von Wirk- und Blindleistungsbereitstellung innerhalb vorgegebener Grenzen gehalten werden.

Aus der EP 2 503 146 A1 sind ein Verfahren und eine Vorrichtung zum Steuern des Betriebs einer Energieerzeugungsanlage während einer Trennung von einem übergeordneten Wechselstromnetz bekannt. Konkret geht es dabei um eine Energieerzeugungsanlage, die mindestens eine Windkraftanlage umfasst, und um den Betrieb der Energieerzeugungsanlage bei einem Ausfall des übergeordneten Wechselstromnetzes, in das ansonsten Energie eingespeist wird. Für diesen Betrieb wird ein externer Generator über ein Kabel an Hilfsausrüstung der Windkraftanlage angeschlossen, um dieser Hilfsausrüstung, wie beispielsweise den Stelleinrichtungen für die Rotorblätter der Windkraftanlage, Wirkleistung zur Verfügung zu stellen. Über einen Transformator ist das Kabel nicht nur an die Hilfseinrichtung, sondern auch an einen Wechselrichter der jeweiligen Windkraftanlage angeschlossen. Mit dem Wechselrichter wird Blindleistung bereitgestellt, um den externen Generator in einem stabilen Bereich der PQ-Ebene, d. h. innerhalb der von der über der möglichen Blindleistung des Generators aufgetragenen möglichen Wirkleistung des Generators aufgespannten Fläche, zu betreiben. Hintergrund ist, dass ein üblicher Dieselgenerator oberhalb von 20 % Blindleistung seiner Nominalleistung für bestimmte Verhältnisse von Wirkleistung zu Blindleistung instabil werden kann und dass ein akzeptabler Betriebsbereich in der PQ-Ebene etwa zwischen den einen Leistungsfaktor von 1,0 und einen Leistungsfaktor von 0,8 repräsentierenden Geraden liegt. Mit Hilfe der mit dem Wechselrichter der Windkraftanlage erzeugten Blindleistung wird der Betriebspunkt des externen Generators in diesem Bereich gehalten.

## AUFGABE DER ERFINDUNG

Der Erfindung liegt die Aufgabe zugrunde, ein Verfahren zum Betrieb eines Kraftwerks fluktuierender elektrischer Leistungsfähigkeit aufzuzeigen, das neben einem Wirkleistung und Blindleistung abgebenden spannungsstellenden Netzbildner und mindestens einer Last an ein begrenztes Wechselstromnetz angeschlossen ist, wobei zwar einerseits durch Einspeisung von Leistung von dem Kraftwerk ein nicht durch regenerative Energiequellen gedeckter Energiebedarf des Netzbildners und anderer an das begrenzte Wechselstromnetz angeschlossener Leistungsquellen auch ohne Verwendung von Batterien als Zwischenspeicher für elektrische Energie effektiv reduziert wird, wobei aber andererseits das begrenzte Wechselstromnetz auch gegenüber Schwankungen der Leistungsaufnahme aller Lasten und der Leistungsabgabe des Kraftwerks stabilisiert wird.

## LÖSUNG

Die Aufgabe der Erfindung wird durch ein Verfahren mit den Merkmalen des unabhängigen Patentanspruchs 1 gelöst. Die abhängigen Patentansprüche 2 bis 12, und 14 sind auf bevorzugte Ausführungsformen des erfindungsgemäßen Verfahrens gerichtet. Der Patentanspruch 13 betrifft eine Steuervorrichtung zur erfindungsgemäßen Steuerung eines Kraftwerks. Patentanspruch 15 betrifft ein Photovoltaikkraftwerk mit einer erfindungsgemäßen Steuervorrichtung.

## BESCHREIBUNG DER ERFINDUNG

Bei einem erfindungsgemäßen Verfahren zum Betrieb eines Kraftwerks fluktuierender elektrischer Leistungsfähigkeit, das neben einem Wirkleistung und Blindleistung abgebenden spannungsstellendenden Netzbildner und mindestens einer Last an ein begrenztes Wechselstromnetz angeschlossen ist, wird in der PQ-Ebene ein gewünschter geschlossener Betriebsbereich des Netzbildners definiert, in dem der Netzbildner auftretende Schwankungen einer Netzwechselspannung auf dem Wechselstromnetz besonders effizient auszuregeln vermag. Dann wird ein aktueller Betriebspunkt des Netzbildners in der PQ-Ebene ermittelt und eine Abgabe von Wirkleistung und Blindleistung durch das Kraftwerk wird so gesteuert, dass der Betriebspunkt des Netzbildners in dem gewünschten Betriebsbereich gehalten wird.

In der PQ-Ebene spannt die über der möglichen Blindleistung des Netzbildners aufgetragene mögliche Wirkleistung des Netzbildners eine Fläche auf. Innerhalb dieser Fläche liegen Betriebsbereiche des Netzbildners, in denen er möglichst nicht betrieben wird. Aber auch in den Betriebsbereichen, in denen er grundsätzlich betrieben werden kann, resultiert ein unterschiedliches Verhalten des jeweiligen Netzbildners bei in dem Wechselstromnetz auftretenden Spannungs- und Frequenzschwankungen der Netzwechselspannung. So lässt sich ein Betriebsbereich des Netzbildners in der PQ-Ebene definieren, indem der Netzbildner auftretenden Schwankungen der Netzwechselspannung auf dem Wechselstromnetz besonders effizient begegnet, d. h. diese in dem ihm maximal möglichen Umfang effizient ausregelt, ohne dabei in einen instabilen Betriebszustand zu geraten. Erfindungsgemäß wird der Netzbildner mit Hilfe des Kraftwerks und dessen Einspeisung von Wirkleistung und Blindleistung in diesem gewünschten Betriebsbereich gehalten. Damit trägt das Kraftwerk in erheblichem Ausmaß zur Stabilisierung des Wechselstromnetzes bei.

Es versteht sich, dass der geschlossene Betriebsbereich, in dem der Netzbildner auftretende Schwankungen der Netzwechselspannung auf dem Wechselstromnetz besonders effizient auszuregeln vermag, nicht zwingend grafisch in einer Auftragung der Wirkleistung über der Blindleistung des Netzbildners festgelegt werden muss. Vielmehr reicht es aus, den gewünschten Betriebsbereich des Netzbildners abhängig von seiner Wirkleistung und seiner Blindleistung zu definieren. Jeder solche Betriebsbereich lässt sich aber in der PQ-Ebene darstellen. Entsprechendes gilt für die Ermittlung des Betriebspunkts des Netzbildners. Auch wenn der aktuelle Betriebspunkt anders als direkt durch die von dem Netzbildner abgegebene Wirkleistung und Blindleistung definiert wird, lässt er sich in die PQ-Ebene übertragen.

Dass der gewünschte Betriebsbereich bei dem erfindungsgemäßen Verfahren geschlossen ist, kann insbesondere bedeuten, dass der gewünschte Betriebsbereich nicht durch die Leistungsgrenze der Fläche begrenzt ist, die von der über der möglichen Blindleistung des Netzbildners aufgetragenen möglichen Wirkleistung des Netzbildners aufgespannt wird, sondern seine Grenzen mit Abstand zu der Leistungsgrenze dieser Fläche verlaufen, weil der Netzbildner bei einem Betriebspunkt an der Leistungsgrenze in dem Wechselstromnetz aufgrund von erhöhtem Leistungsbedarf auftretende Schwankungen der Netzwechselspannung nicht mehr ausregeln kann.

Die Möglichkeit, die Abgabe von Wirkleistung und Blindleistung durch das Kraftwerk so zu variieren, dass der Betriebspunkt des Netzbildners verschoben und auf diese Weise in dem gewünschten Betriebsbereich gehalten werden kann, ist bei verschiedenen bekannten Kraftwerken gegeben, insbesondere durch geeignete Ansteuerung ihrer Wechselrichter.

Grundsätzlich mag es einen idealen Betriebspunkt des Netzbildners geben, aus dem heraus er auftretende Schwankungen der Netzwechselspannung auf dem Wechselstromnetz mit maximaler Effizienz auszuregeln vermag. Grundsätzlich kann auch nur eine nahe Umgebung dieses idealen Betriebspunkts als der gewünschte Betriebsbereich des Netzbildners definiert werden. Bevorzugt ist es jedoch, den gewünschten Betriebsbereich in Richtung der Wirkleistung möglichst groß zu definieren, um möglichst viel Wirkleistung mit dem Kraftwerk in das Wechselstromnetz einzuspeisen, um so möglichst viel Energie aus nicht regenerativen Energiequellen einzusparen. Entsprechend wird in einer bevorzugten Ausführungsform des erfindungsgemäßen Verfahrens, solange der Betriebspunkt des Netzbildners in dem gewünschten Betriebsbereich bleibt, die Einspeisung von Wirkleistung von dem Kraftwerk maximiert.

Der Netzbildner kann bei dem erfindungsgemäßen Verfahren alternativ zu einem Brennkraftgenerator beispielsweise ein Wasserkraftgenerator oder ein Batterieinverter sein. Ein Wasserkraftgenerator, bei dem eine elektrische Maschine von einer Wasserturbine angetrieben wird, verbraucht zwar keine nicht regenerative Energie, doch ist er nur dann, wenn sein Betriebspunkt in einem kleinen gewünschten Betriebsbereich gehalten wird, in der Lage, auftretende Schwankungen der Netzwechselspannung auf dem Wechselstromnetz effizient auszuregeln. Bei einem Batterieinverter als Netzbildner muss zusätzlich der aktuelle Ladezustand der angeschlossenen Batterie berücksichtigt werden, was durch einen vom Ladezustand abhängigen gewünschten Betriebsbereich des Batterieinverters geschehen kann. Auch grundsätzlich muss der gewünschte Betriebsbereich des Netzbildners nicht fest sein, sondern er kann im Falle vorhersehbarer Einflüsse auf die Netzwechselspannung auf dem Wechselstromnetz festgelegt werden. Wenn beispielsweise absehbar ist, dass sich der Bedarf an Blind- und/oder Wirkleistung in einer bestimmten Richtung ändern wird, kann der gewünschte Betriebsbereich des Netzbildners zuvor in der Gegenrichtung verschoben werden, um für das Ausregeln der mit der eintretenden Änderung des Leistungsbedarfs eintretenden Änderung der Netzwechselspannung auf dem Wechselstromnetz eine zusätzliche Regelreserve bereitzustellen.

In besonders interessanten Ausführungsformen des erfindungsgemäßen Verfahrens ist neben dem Netzbildner mindestens eine weitere Leistungsquelle an das begrenzte Stromnetz angeschlossen, die bedarfsweise aktiviert oder deaktiviert wird. Dabei erfolgt auch dieses bedarfsweise Aktivieren und Deaktivieren mit der Maßgabe, den Betriebspunkt des Netzbildners in dem gewünschten Betriebsbereich zu halten.

Bei jeder weiteren Leistungsquelle, die bei dem erfindungsgemäßen Verfahren bedarfsweise aktiviert oder deaktiviert wird, kann es sich ebenfalls um eine spannungsstellende Leistungsquelle, d. h. um einen weiteren Netzbildner, handeln. Dann ist es bevorzugt, wenn alle spannungsstellenden Leistungsquellen gleichartig sind, d. h. bei einem gleichen Betriebspunkt in der PQ-Ebene auftretende Schwankungen der Netzwechselspannung auf dem Wechselstromnetz effizient auszuregeln vermögen, so dass für alle spannungsstellenden Leistungsquellen ein gemeinsamer gewünschter Betriebsbereich definiert und eingehalten werden kann. Die weiteren Leistungsquellen können aber auch sämtlich oder zum Teil spannungsstützende Leistungsquellen ohne netzbildende Funktion sein.

Konkret kann die mindestens eine weitere Leistungsquelle bei dem erfindungsgemäßen Verfahren ein Brennkraftgenerator sein. Allerdings braucht das Aktivieren eines Brennkraftgenerators, bis dieser in der Lage ist, Leistung in das Wechselstromnetz einzuspeisen, gewisse Zeit. Das bedarfsweise Aktivieren und Deaktivieren eines Brennkraftgenerators ist daher ungeeignet, kurzfristige Leistungsschwankungen und daraus resultierende Schwankungen der Amplitude und der Frequenz der Netzwechselspannung auf dem Wechselstromnetz auszugleichen. Vielmehr ist für diesen Ausgleich eine Leistungsreserve aller bereits aktivierter Leistungsquellen vorzuhalten. Das Einhalten des gewünschten Betriebsbereichs des Netzbildners kann für das Bereitstellen dieser Reserveleistung ausreichend sein, weil bei einem in diesem gewünschten Betriebsbereich liegenden Betriebspunkt des Netzbildners zumindest seine Leistung noch nicht voll ausgeschöpft ist.

Wenn die mindestens eine weitere Leistungsquelle bei dem erfindungsgemäßen Verfahren von einer Leistungsquellensteuerung aktiviert wird, muss diese Leistungsquellensteuerung selbst nicht zwingend auf das erfindungsgemäße Verfahren abgestimmt sein. Vielmehr kann die Einspeisung von Wirkleistung von dem Kraftwerk so weit reduziert werden, dass die mindestens eine oder noch eine weitere Leistungsquelle von der Leistungsquellensteuerung aktiviert wird, wenn der Betriebspunkt des Netzbildners den gewünschten Betriebsbereich nach außen, d. h. zu höheren Leistungen hin, verlässt. Die von der neu aktivierten weiteren Leistungsquelle bereitgestellte Leistung verschiebt dann den Arbeitspunkt des Netzbildners wieder nach innen.

Umgekehrt kann, wenn die mindestens eine weitere Leistungsquelle von einer Leistungsquellensteuerung deaktiviert wird, die Einspeisung von Leistung von dem Kraftwerk so weit erhöht werden, dass die mindestens eine oder die noch weitere Leistungsquelle von der Leistungsquellensteuerung deaktiviert wird, wenn der Betriebspunkt des Netzbildners den gewünschten Betriebsbereich nach innen, d. h. zu niedrigeren Leistungen hin, verlässt.

Bei dem erfindungsgemäßen Verfahren kann die in dem Stromnetz aktuell verfügbare Reserveleistung auch konkret ermittelt werden, wobei nur aktivierte Leistungsquellen berücksichtigt werden. Wenn die ermittelte Reserveleistung eine minimale Reserveleistung unterschreitet, kann die Einspeisung von Leistung von dem Kraftwerk so weit reduziert werden, dass die mindestens eine oder noch eine weitere Leistungsquelle von der Leistungsquellensteuerung aktiviert wird. Auf diese Weise wird die minimale Reserveleistung zusätzlich zu dem Halten des Netzbildners in dem gewünschten Betriebsbereich sichergestellt.

Die minimale Reserveleistung ist ein vorgegebener Wert, der fest vorgegeben sein kann, der aber auch abhängig von einem aktuellen Bedarf an Reserveleistung vorgegeben werden kann. Einzelheiten hierzu finden sich weiter unten. Durch das Aktivieren jeder zusätzlichen Leistungsquelle wird die in dem Wechselstromnetz verfügbare Reserveleistung erhöht, wodurch das Ziel, die minimale Reserveleistung bereitzustellen, bereits erreicht sein kann. Möglicherweise ist für das Erreichen dieses Ziels jedoch das Aktivieren von mehr als einer zusätzlichen Leistungsquelle erforderlich.

Ausgelöst wird das Aktivieren der zusätzlichen Leistungsquelle(n) zur Einhaltung der minimalen Reserveleistung wie zum Halten des Betriebspunkts des Netzbildners in dem gewünschten Betriebsbereich durch Variieren der Einspeisung von Leistung von dem Kraftwerk. Dadurch "sieht" die Leistungsquellensteuerung eine von ihr abzudeckende größere Last, die der Differenz zwischen der Summe der Leistungsaufnahmen aller an das Wechselstromnetz angeschlossenen Lasten einerseits und der von dem Kraftwerk eingespeisten Leistung andererseits ist. Da auch die Leistungsquellensteuerung eine minimale Reserveleistung vorhält, aktiviert sie entsprechend eine oder mehrere zusätzliche Leistungsquellen. Dabei kann es vorteilhaft sein, wenn die Leistungsquellensteuerung von grundsätzlich etwa derselben minimalen Reserveleistung ausgeht, wie sie beim erfindungsgemäßen Betrieb des Kraftwerks berücksichtigt wird. Bei dem erfindungsgemäßen Betrieb des Kraftwerks wird aber in die Leistungsquellensteuerung selbst nicht eingegriffen. Es muss nur bekannt sein, welche Leistungsquellen aktuell aktiviert sind, welche maximale Leistung diese Leistungsquellen zur Verfügung stellen könnten und wie viel Leistung alle Leistungsquellen aktuell in das Wechselstromnetz einspeisen. Dies ist Voraussetzung dafür, dass die aktuell in dem Wechselstromnetz verfügbare Reserveleistung ermittelt werden kann.

Bei dieser Ausführungsform des erfindungsgemäßen Verfahrens zum Betrieb des Kraftwerks kann weiterhin dann, wenn die ermittelte Reserveleistung eine maximale Reserveleistung überschreitet, die Einspeisung von Leistung von dem Kraftwerk soweit erhöht werden, dass die mindestens eine oder die noch weitere Leistungsquelle von der Leistungsquellensteuerung deaktiviert wird. Zumindest die eine als Netzbildner verwendete Leistungsquelle bleibt jedoch immer aktiv.

Auch die maximale Reserveleistung kann ein fest vorgegebener Wert sein oder abhängig von der aktuell tatsächlich benötigten Reserveleistung vorgegeben werden. Weiterhin wird auch für das Deaktivieren einer der bislang aktivierten Leistungsquellen nicht in die Generatorsteuerung eingegriffen, sondern der Leistungsquellensteuerung wird eine von ihr abzudeckende reduzierte Last vorgeführt, die sie zum Deaktivieren der Leistungsquelle veranlasst. So werden aktuell nicht benötigte Leistungsquellen zugunsten einer erhöhten Einspeisung von Leistung von dem Kraftwerk deaktiviert. Dies kann auch die Deaktivierung mehrerer Leistungsquellen zugleich oder kurz hintereinander umfassen.

Insgesamt wird mit dem erfindungsgemäßen Verfahren dafür gesorgt, dass zwar immer so viele Leistungsquellen aktiviert sind, wie sie zur Bereitstellung einer sinnvollen Reserveleistung erforderlich sind, aber auch nicht von mehr Leistungsquellen, um die Einspeisung von Leistung von dem Kraftwerk im Rahmen eines stabilen Betriebs des Wechselstromnetzes zu maximieren. Dieses Vorgehen hat zur unmittelbaren Folge, dass bei größerer von dem Kraftwerk verfügbarer Leistung alle aktuell aktivierten Leistungsquellen soweit als sinnvoll möglich nur zur Bereitstellung von Reserveleistung genutzt werden, aber nicht zur tatsächlichen Einspeisung von Leistung in das Wechselstromnetz. Die von der Gesamtheit der Leistungsquellen zu tragende Last ist dabei nur gerade so hoch zu halten, dass die Leistungsquellensteuerung keine der aktiven Leistungsquellen abschaltet, wodurch die verfügbare Reserveleistung reduziert würde, und dass die Betriebspunkte aller Netzbildner in ihrem gewünschten Betriebsbereich gehalten werden.

Anders gesagt kann dann, wenn die ermittelte Reserveleistung im Bereich zwischen der minimalen und der maximalen Reserveleistung liegt, die Einspeisung von Leistung von dem Kraftwerk unter Einhaltung des Kriteriums maximiert werden, dass gerade keine der weiteren Leistungsquellen von der Leistungsquellensteuerung deaktiviert wird.

Wie bereits angedeutet wurde, wird bei dem erfindungsgemäßen Verfahren vorzugsweise die Leistungsaufnahme aller Lasten in dem Wechselstromnetz erfasst. Dies kann durch direkte Messung der einzelnen Komponenten der Leistungsaufnahme oder durch Erfassung der einzelnen Komponenten der Leistungsabgabe aller Leistungsquellen, des Kraftwerks und des Netzbildners erfolgen.

Die minimale Reserveleistung und auch die maximale Reserveleistung können unter Verwendung eines Prozentsatzes der aktuellen Leistungsaufnahme aller Lasten als Summand berechnet werden. Das heißt, bei dem erfindungsgemäßen Verfahren können die minimale und/oder die maximale Reserveleistung mit steigender Leistungsaufnahme aller Lasten ansteigen, weil sich zu erwartende Schwankungen der Leistungsaufnahme proportional zu der Leistungsaufnahme verhalten können.

Weiterhin kann bei dem erfindungsgemäßen Verfahren neben der aktuellen Leistungsabgabe auch die aktuelle Leistungsfähigkeit des Kraftwerks erfasst werden. Die Differenz zwischen der aktuellen Leistungsabgabe und der aktuellen Leistungsfähigkeit des Kraftwerks kann zumindest teilweise als aktuell verfügbare Reserveleistung angesehen werden.

Die minimale Reserveleistung und/oder die maximale Reserveleistung können einen Prozentsatz der aktuellen Leistungsabgabe des Kraftwerks als Summand umfassen, weil ein Einbruch bei dieser Leistungsabgabe, beispielsweise durch eine aufziehende Wolke, grundsätzlich zu befürchten ist. Dass ein solcher Leistungseinbruch relativ unwahrscheinlich ist, wenn die aktuelle Leistungsabgabe weit unter der aktuellen Leistungsfähigkeit liegt, wird beispielsweise dann, wenn die Differenz dieser beiden Werte in die aktuell verfügbare Reserveleistung eingeht, bereits ausreichend berücksichtigt. Grundsätzlich kann diese Berücksichtigung aber auch bei der minimalen Reserveleistung und/oder der maximalen Reserveleistung erfolgen.

Darüber hinaus können die minimale Reserveleistung und/oder die maximale Reserveleistung unter Berücksichtigung zeitabhängiger Faktoren oder Summanden berechnet werden, die beispielsweise zu bestimmten Tageszeiten besonders große Schwankungen bei der Leistungsaufnahme aller Lasten widerspiegeln.

Bei der maximalen Reserveleistung ist darüber hinaus zu berücksichtigen, um wie viel die aktuell verfügbare Reserveleistung abfällt, wenn eine der aktuell aktiven Leistungsquellen deaktiviert wird. Beispielsweise kann die maximale Reserveleistung berechnet werden als Summe der minimalen Reserveleistung und der maximalen Leistungsfähigkeit der aktuell aktiven weiteren Leistungsquelle, die von der Generatorsteuerung als erste deaktiviert würde, multipliziert mit einem Stabilisierungsfaktor größer 1, um nach dem Deaktivieren dieser Leistungsquelle mit der aktuell verfügbaren Reserveleistung sofort nicht die minimale Reserveleistung zu unterschreiten.

Bei dem erfindungsgemäßen Verfahren kann die Einspeisung von Leistung von dem Kraftwerk zusätzlich auch so reduziert werden, dass eine längerfristige Unterschreitung einer Mindestleistungsabgabe und jede Unterschreitung einer Leistungsabgabe von null bei allen Leistungsquellen verhindert wird. Die Mindestleistungsabgabe einer Leistungsquelle ist die Leistungsabgabe, ab der ein ordentlicher Betrieb, insbesondere mit sauberer Verbrennung des Kraftstoffs in einem Brennkraftgenerator, möglich ist, der also Voraussetzung für eine hohe Lebensdauer und lange Wartungsintervalle der Leistungsquelle ist. Es kann Situationen geben, in denen die Leistungsquellensteuerung eine auch längerfristige Unterschreitung der Mindestleistungsabgabe einer oder mehrerer Leistungsquellen nicht verhindern kann, weil zum Beispiel für die Leistungsquellen eine Mindestaktivierungszeit festgelegt ist oder auch weil keine Leistungsquellen mehr abgeschaltet werden können, um die von der Leistungsquellensteuerung berücksichtigte minimale Reserveleistung einzuhalten. Unter diesen Randbedingungen kann es sinnvoll sein, die von dem Kraftwerk eingespeiste Leistung nicht zu maximieren, sondern sogar zurückzunehmen, um den Betriebspunkt des Netzbildners in dem gewünschten Betriebsbereich zu halten und das Gesamtsystem zu optimieren.

Die schnelle Regelbarkeit der von dem Kraftwerk eingespeisten Leistung kann erfindungsgemäß insbesondere dazu genutzt werden, jede Unterschreitung einer Leistungsabgabe von null, d. h. eine Leistungsaufnahme bei allen Leistungsquellen außer Batterieinvertern zu verhindern. Eine solche Leistungsaufnahme führt zum Beispiel bei Brennkraftgeneratoren in der Regel zu einer Notabschaltung. Wenn ein Brennkraftgenerator als Netzbildner verwendet wird, hat dessen Abschalten einen Zusammenbruch des gesamten Wechselstromnetzes zur Folge.

Eine erfindungsgemäße Steuervorrichtung zum Steuern eines Kraftwerks fluktuierender elektrischer Leistungsfähigkeit ist dadurch gekennzeichnet, dass sie zur Ausführung eines erfindungsgemäßen Verfahrens ausgebildet ist. Dies schließt ein, dass sie eigene Messeinrichtungen zur Erfassung der von ihr benötigten Messwerte und anderen Informationen umfasst, soweit sie diese Messwerte und Informationen nicht beispielsweise von der Generatorsteuerung abfragen kann. Beispielsweise können einfache Vibrationssensoren an den einzelnen Brennkraftgeneratoren als weitere Leistungsquellen vorgesehen werden, um zu erfassen, welche hiervon aktuell aktiviert sind. Zusätzlich muss dann zumindest die Leistungsaufnahme aller Lasten in dem Wechselstromnetz direkt oder indirekt erfasst werden. Wenn die aktuellen Leistungsabgaben der einzelnen Leistungsquellen zur Verfügung stehen, ist damit bereits klar, welche derzeit aktiviert sind, und es werden dann zusätzlich nur Werte von dem Kraftwerk benötigt, an das die Steuervorrichtung sowieso angeschlossen ist.

Das erfindungsgemäß betriebene Kraftwerk fluktuierender elektrischer Leistungsfähigkeit kann ein Wind-, Gezeiten- oder Blockheizkraftwerk sein. Insbesondere handelt es sich um ein Photovoltaikkraftwerk. Ein erfindungsgemäßes Photovoltaikkraftwerk weist eine erfindungsgemäße Steuervorrichtung auf.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten relativen Anordnungen und Wirkverbindungen mehrerer Bauteile - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von "einem Element" die Rede ist, ist dies so zu verstehen, dass genau ein Element, zwei Elemente oder mehr Elemente vorhanden sind. Dies gilt auch dann wenn in dem selben Zusammenhang neben dem "einen Element" auch von "mindestens einem anderen Element" die Rede ist. Die genannten Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

## KURZBESCHREIBUNG DER FIGUREN

Im Folgenden wird die Erfindung anhand der beigefügten Figuren weiter erläutert und beschrieben.

Fig. 1 ist ein Prinzipschaltplan eines Inselnetzes, an das ein Photovoltaikkraftwerk neben einem Netzbildner in Form eines Brennkraftgenerators, weiteren Leistungsquellen in Form von Brennkraftgeneratoren und mehreren Lasten angeschlossen ist.

Fig. 2 zeigt verschiedene Betriebsbereiche des Netzbildners gemäß Fig. 1 in einer auf seine Nennleistung normierten Darstellung der PQ-Ebene.

Fig. 3 ist ein Flussdiagramm zur Durchführung einer Ausführungsform des erfindungsgemäßen Verfahrens.

Fig. 4 ist eine Auftragung eines zeitlichen Verlaufs einer mittleren Leistung $\overline{Pout}_{Baj}$ der Brennkraftgeneratoren gemäß Fig. 1; und

Fig. 5 ist ein Flussdiagramm zur Durchführung einer weiteren Routine des erfindungsgemäßen Verfahrens.

## FIGURENBESCHREIBUNG

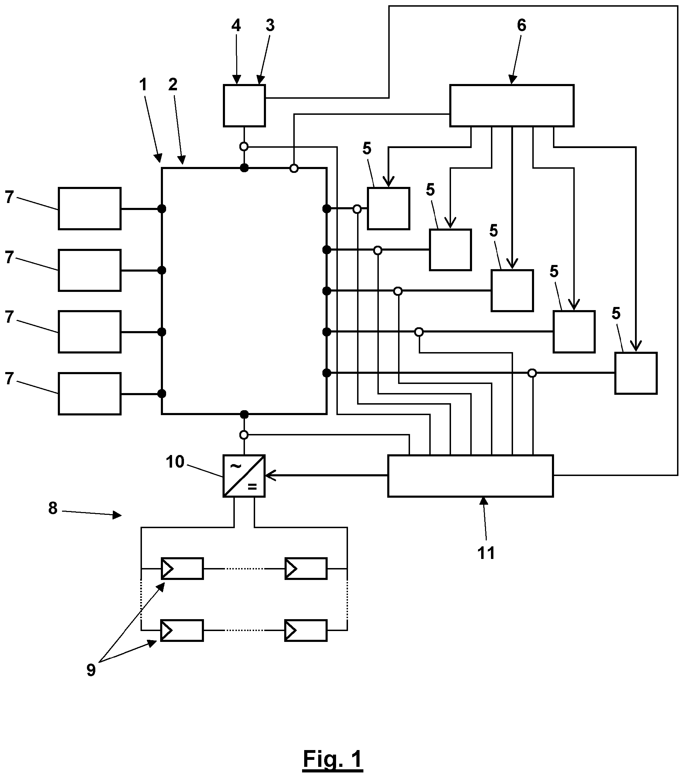

Ein in **Fig. 1** schematisch dargestelltes Wechselstromnetz 1 ist ein Inselnetz 2, d. h. ein begrenztes Wechselstromnetz ohne Verbindung zu einem externen Wechselstromnetz mit im Vergleich zu der Leistungsaufnahme in dem Wechselstromnetz nahezu unbegrenzter Leistungsfähigkeit. An das Wechselstromnetz 1 ist ein spannungsstellender Netzbildner 3 angeschlossen, der Frequenz und Amplitude einer Netzwechselspannung auf dem Wechselstromnetz 1 vorgibt. Im vorliegenden Fall handelt es sich bei dem Netzbildner 3 um eine Leistungsquelle 4 in Form eines Brennkraftgenerators. Unter einem Brennkraftgenerator ist dabei die Kombination einer Brennkraftmaschine, insbesondere eines Dieselmotors, mit einer elektrischen Maschine zu verstehen, die als Generator betrieben wird. An das Wechselstromnetz 1 angeschlossene weitere Leistungsquellen 5 sind hier ebenfalls Brennkraftgeneratoren, und sie werden von einer Leistungsquellensteuerung 6 bedarfsweise aktiviert und auch deaktiviert, d. h. je nach Leistungsangebot in dem Wechselstromnetz 1 bzw. Leistungsaufnahme von Lasten 7, die an das Wechselstromnetz 1 angeschlossen sind. Zusätzlich wird die Leistungsabgabe aller aktivierten Leistungsquellen 4, 5 bedarfsweise variiert. Dies kann durch Steuereinrichtungen der einzelnen Leistungsquellen 5 durchgeführt werden, die so aufeinander abgestimmt sind, dass sich die gesamte Leistungsabgabe gleichmäßig auf alle aktivierten Leistungsquellen 4, 5 verteilt.

Um einen Kraftstoffverbrauch aller Brennkraftgeneratoren oder allgemeiner einen Verbrauch von nicht regenerativer Energie durch alle Leistungsquellen 4 und 5 zu reduzieren, ist ein Kraftwerk 8 vorgesehen, das elektrische Energie von Photovoltaikgeneratoren 9 über einen oder auch mehrere Wechselrichter 10 in das Wechselstromnetz 1 einspeist. Dabei wird die von dem Kraftwerk 8 eingespeiste Leistung von einer Steuervorrichtung 11 so festgelegt, dass ein optimierter Betrieb des in Fig. 1 gezeigten Gesamtsystems resultiert. Dieser optimierte Betrieb ist unter anderem durch folgende Merkmale gekennzeichnet:

- Zu jedem Zeitpunkt liegt ein Betriebspunkt des Netzbildners 3 und aller gleichzeitig aktivierten spannungsstellenden Leistungsquellen 5 in einem gewünschten Betriebsbereich, in dem die Leistungsquellen 4, 5 auftretende Schwankungen der Netzwechselspannung auf dem Wechselstromnetz 1 effizient auszuregeln vermögen.
- Zu jedem Zeitpunkt steht eine ausreichende Reserveleistung insbesondere der Leistungsquellen 4 und 5, aber je nach Auslegung auch unter Einbeziehung des Kraftwerks 8 zur Verfügung, um zu erwartende Erhöhungen der Leistungsaufnahme der Lasten 7 abzudecken. Diese Reserveleistung kann je nach aktueller Auslastung des Kraftwerks 8 auch dazu dienen, beispielsweise durch Aufziehen einer Wolke hervorgerufene Einbrüche bei der Leistungsabgabe des Kraftwerks 8 zu kompensieren.
- Keiner der Leistungsquellen 4, 5 wird für längere Zeit unterhalb einer Mindestleistungsabgabe betrieben, die für eine saubere Verbrennung des Kraftstoffs und entsprechend für einen wartungsarmen Betrieb der als Leistungsquellen 4, 5 verwendeten Brennkraftgeneratoren erforderlich ist.
- In keine der Leistungsquellen 4 und 5 wird Leistung eingespeist, was mit der Gefahr einer Beschädigung der jeweiligen Leistungsquellen verbunden wäre und des Brennkraftgenerators typischerweise zu einem sofortigen Abschalten führen würde. Wenn der Brennkraftgenerator der netzbildenden Quelle 3 abgeschaltet würde, hätte dies ein Zusammenbrechen des Wechselstromnetzes 1 zur Folge.
- Unter den voranstehenden Randbedingungen wird eine maximale Menge an elektrischer Energie von dem Kraftwerk 8 in das Wechselstromnetz 1 eingespeist und somit eine maximale Menge an Kraftstoff bei den als Leistungsquellen 4, 5 dienenden Brennkraftgeneratoren eingespart.

Die Leistungsabgabe des Wechselrichters 10 des Kraftwerks 8 kann sehr schnell variiert werden, so dass die Steuervorrichtung 11 gemäß Fig. 1 auch sehr kurzfristige Schwankungen der Leistungsaufnahme der Lasten 7 ausregeln kann, solange diese nicht so groß werden, dass sie über die aktuelle Leistungsfähigkeit des Kraftwerks 8 hinaus gehen. Diese kurzfristigen Schwankungen der Leistungsaufnahme schlagen so nicht auf die als Leistungsquellen 4, 5 dienenden Brennkraftgeneratoren durch, die aufgrund ihrer mechanischen Trägheitsmomente nur langsamere Leistungsschwankungen ausgleichen können. Auf diese Weise werden die Leistungsquellen 4 und 5 mit Hilfe des Kraftwerks 8 grundsätzlich weniger belastet, wodurch sich weitere Vorteile für das Gesamtsystem gemäß Fig. 1 ergeben, auch wenn die Leistungsfähigkeit des Kraftwerks 8 zumeist nur teilweise ausgenutzt wird. Größere Schwankungen der Leistungsaufnahme der Lasten 7 und daraus resultierende Schwankungen der Amplitude und der Frequenz der Netzwechselspannung auf dem Wechselstromnetz 1 können aber nur unter Beteiligung der Leistungsquellen 4, 5 ausgeregelt werden. Damit dies effizient geschieht, müssen sich zumindest alle spannungsstellenden Leistungsquellen und damit vor allem der Netzbildner 3 in einem für dieses Ausregeln von Schwankungen der Netzwechselspannung günstigen Betriebsbereich befinden.

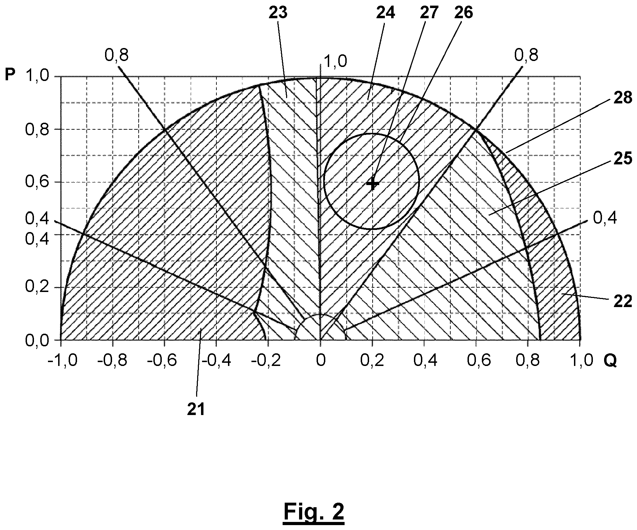

Der für das Ausregeln von Schwankungen der Netzwechselspannung durch alle spannungsstellenden Leistungsquellen 4, 5 einzuhaltende Betriebsbereich ist nicht allein anhand der von den Leistungsquellen 4, 5 abgegebenen Wirkleistung zu definieren, sondern er ist sowohl in Bezug auf die abgegebene Wirkleistung als auch die abgegebene Blindleistung festzulegen. Fig. 2 ist die Auftragung der Wirkleistung P über der Blindleistung Q eines als Netzbildner 3 eingesetzten Brennkraftgenerators, d. h. hier konkret einer zum Beispiel von einem Dieselmotor angetriebenen Synchronmaschine. Dabei sind die Einheiten, in denen die Blindleistung Q und die Wirkleistung P angegeben sind, relative Anteile an der Nenn- oder Maximalleistung des Brennkraftgenerators. Anders gesagt handelt es sich bei Fig. 2 um eine auf die Nennleistung des Brennkraftgenerators normierte Wiedergabe der PQ-Ebene. Der negative Bereich der x-Achse in Richtung der Blindleistung Q entspricht dabei einem negativen Phasenwinkel zwischen Spannung und Strom, bei dem der Strom der Spannung in dem Wechselstromnetz voreilt, während der positive Bereich der x-Achse einem positiven Phasenwinkel mit dem Strom voreilender Spannung entspricht. Die radial vom Ursprung durch jeden der beiden Quadranten der PQ-Ebene verlaufenden Geraden entsprechen Leistungsfaktoren von 0,4 bzw. 0,8. In einem Betriebsbereich 21 des Brennkraftgenerators ist die von ihm gestellte Netzwechselspannung instabil. In einem Betriebsbereich 22 droht eine Überhitzung seiner elektrischen Maschine. Dazwischen liegen Betriebsbereiche 23 bis 25, wobei die von dem Brennkraftgenerator gestellte Netzwechselspannung in dem Betriebsbereich 24 mit maximal kleinem negativen Phasenwinkel bis zu einem positiven Phasenwinkel mit einem Leistungsfaktor von 0,8 besonders stabil ist. Innerhalb des Betriebsbereichs 24 ist ein gewünschter Betriebsbereich 26 eingezeichnet. Wenn sich der Brennkraftgenerator innerhalb dieses gewünschten Betriebsbereichs 26 befindet, weist er seine maximale Fähigkeit auf, Schwankungen der Netzwechselspannung auf dem Wechselstromnetz 1 effektiv auszugleichen, weil dabei auftretende Verschiebungen seines Betriebspunkts 27 nicht dazu führen, dass ein ungünstiger Betriebsbereich 21, 22 oder die alle möglichen Betriebsbereiche 21 bis 26 einschließende Leistungsgrenze 28 erreicht wird. Bei dem erfindungsgemäßen Verfahren wird der Betriebspunkt 27 des Netzbildners 3 mit Hilfe von Einspeisung von Wirkleistung und Blindleistung mit dem Kraftwerk 8 in dem gewünschten Bereich 26 gehalten. Da sich die Leistung bei gleichartigen Leistungsquellen 4, 5 gleichmäßig auf alle Leistungsquellen 4, 5 verteilt, liegen auch alle anderen aktivierten Brennkraftgeneratoren mit ihrem Betriebspunkt 27 in dem gewünschten Bereich 26 der PQ-Ebene. So wird insgesamt eine hohe Kapazität zum effektiven Ausregeln von Schwankungen der Netzwechselspannung auf dem Wechselstromnetz 1 bereitgestellt. Das Halten des Betriebspunkts 27 aller Leistungsquellen 4, 5 in dem gewünschten Bereich 26 hat auch zur Folge, dass immer eine ausreichende Reserveleistung von den Leistungsquellen 4, 5 verfügbar ist, um schwankenden Leistungsanforderungen der Lasten 7 zu begegnen.

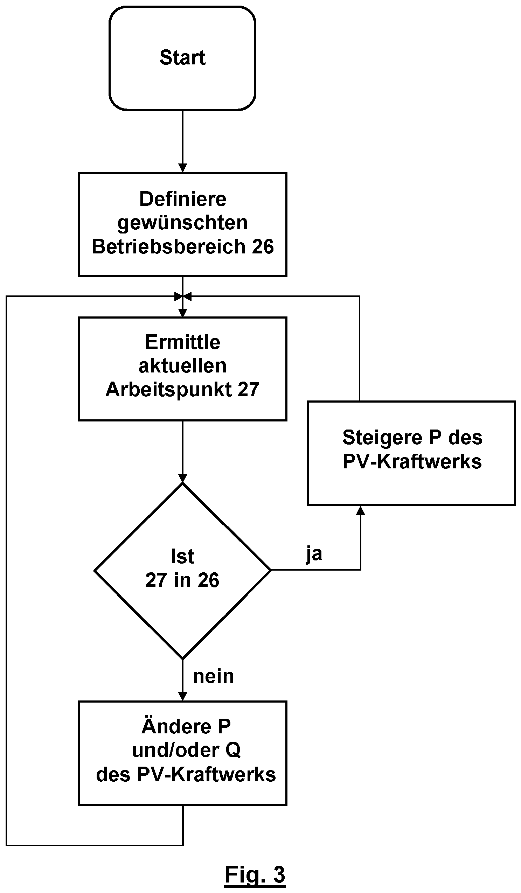

Das in **Fig. 3** skizzierte Flussdiagramm zeigt den grundsätzlichen Ablauf des erfindungsgemäßen Verfahrens. Nach dem Starten wird ein gewünschter Betriebsbereich 26 definiert. Dabei kann es sich um einen für die jeweilige Konstellation des Wechselstromnetzes 1 festen Betriebsbereich handeln, oder dieser Betriebsbereich wird der jeweiligen Betriebssituation angepasst. Dann wird der aktuelle Betriebspunkt 27 des Netzbildners 3 bzw. aller spannungsstellenden Leistungsquellen 4, 5 bestimmt. Solange sich der Betriebspunkt 27 innerhalb des gewünschten Betriebsbereichs 26 befindet, wird die Wirkleistung P des PV-Kraftwerks gesteigert, um die mit Hilfe des Kraftwerks 8 eingesparte, weil nicht von den Leistungsquellen 4, 5 verbrauchte nicht regenerative Energie zu maximieren. Wenn hingegen der Betriebspunkt 27 nicht innerhalb des gewünschten Betriebsbereichs 26 liegt, wird die von dem PV-Kraftwerk in das Wechselstromnetz 1 eingespeiste Wirkleistung P und/oder Blindleistung Q so geändert, dass der Betriebspunkt 27 in den gewünschten Betriebsbereich 26 zurückgeführt wird. Das Ändern insbesondere der Wirkleistung P des PV-Kraftwerks 8 kann nicht nur zur direkten Verschiebung des Betriebspunkts 27 des Netzbildners 3 genutzt werden, sondern auch dazu, dass die Leistungsquellensteuerung 6 Leistungsquellen 5 aktiviert oder deaktiviert und dadurch die angestrebte Verschiebung des Betriebspunkts 27 zurück in den gewünschten Betriebsbereich 26 bewirkt wird. Auf diese Weise wird eine mittlere Leistung, d. h. eine über alle Leistungsquellen 5 gemittelte Leistung, sowohl in Bezug auf ihren Wirkleistungsanteil als auch ihren Blindleistungsanteil bereits in vorteilhaften Grenzen gehalten. Zusätzlich kann die Reserveleistung, die für die Versorgung der an das Wechselstromnetz 1 angeschlossenen Lasten 7 zur Verfügung steht, aber auch noch separat überwacht und ggf. nachjustiert werden.

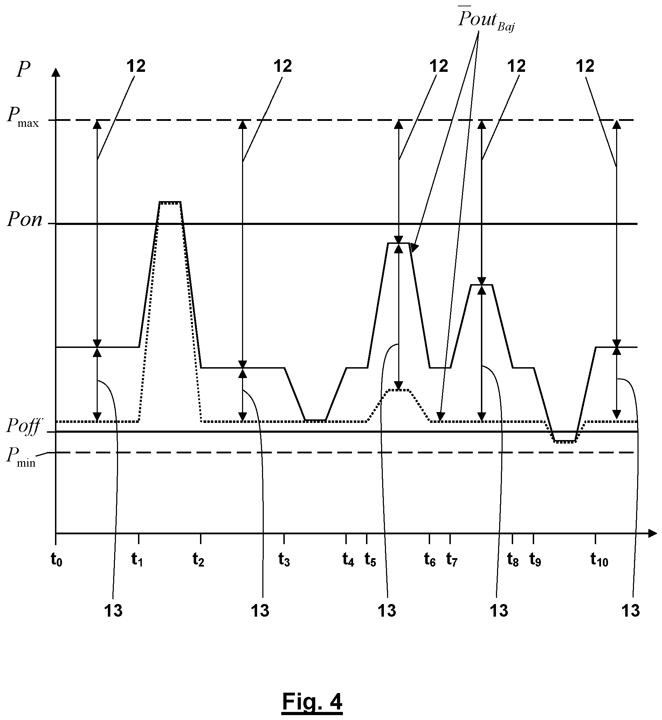

**Fig. 4** zeigt einen zeitlichen Verlauf einer mittleren Leistungsabgabe $Pout_{Baj}$ aller derzeit aktivierten Leistungsquellen 4 und 5 gemäß Fig. 1. Neben dieser mittleren Leistung sind in Fig. 4 eine maximale Leistung Pmax und die Mindestleistungsabgabe Pmin zur Darstellung der Grenzen eingetragen, in denen die mittlere Leistung $Pout_{Baj}$ in jedem Fall gehalten werden sollte. Darüber hinaus sind eine Leistung $Pon$ und eine Leistung $Poff$ eingetragen, die die maximale Auslastung der Leistungsquellen und die minimale Auslastung der Leistungsquellen markieren, bei denen die Leistungsquellensteuerung 6 gemäß Fig. 1 eine zusätzliche Leistungsquelle aktiviert bzw. eine der derzeit aktiven Leistungsquellen deaktiviert. In dem Fig. 2 zugrundeliegenden Beispiel ist davon ausgegangen, dass die Werte von $Pmax$, $Pmin$, $Pon$ und $Poff$ für alle Leistungsquellen 4 und 5 gemäß Fig. 1 gleich sind.

Der Verlauf von $Pout_{Baj}$ ist in Fig. 4 einmal mit durchgezogener Linie wiedergegeben, um die Situation darzustellen, die sich ohne Einspeisung von Leistung von dem Kraftwerk 8 gemäß Fig. 1 einstellen würde. Punktiert ist der Verlauf von $Pout_{Baj}$ dargestellt, der sich bei Einspeisung von Leistung von dem Kraftwerk 8 gesteuert von der Steuervorrichtung 11 gemäß Fig. 1 einstellt.

In einem ersten Zeitraum zwischen einem Zeitpunkt $t_0$ und einem Zeitpunkt $t_1$ läge die mittlere Leistungsausgabe $Pout_{Baj}$ ohne Unterstützung durch das Kraftwerk zwar deutlich unter $Pon$, aber auch deutlich über $Poff$. Das heißt, es ist genügend Leistungsreserve zwischen $Pout_{Baj}$ und Pmax vorhanden, die hier durch den Abstand 12 illustriert ist. Der Abstand 12 ist dabei nicht unmittelbar die Leistungsreserve in dem Wechselstromnetz 1 gemäß Fig. 1, sondern er ist dafür noch mit der Anzahl der aktuell aktiven Leistungsquellen malzunehmen. Zudem berücksichtigt er nicht eine etwaige Leistungsreserve des Kraftwerks 8. Durch zusätzliche Einspeisung von Leistung von dem Kraftwerk 8 wird $\overline{P}out_{Baj}$ auf einen Wert nur wenig über $Poff$ herabgesetzt. Diese Leistung des Kraftwerks wird durch den Abstand 13 illustriert, der aber ebenfalls noch mit der Anzahl der aktiven Leistungsquellen malzunehmen ist, um die Einspeisung von Leistung von dem Kraftwerk insgesamt abzubilden. Der Abstand 13 deutet aber an, wie viel Kraftstoff bei jedem als Leistungsquelle dienenden aktiven Brennkraftgenerator durch das Kraftwerk eingespart werden kann.

Nach dem Zeitpunkt $t_1$ steigt die Leistungsaufnahme der Lasten und damit die Leistungsabgabe der Leistungsquellen in dem Wechselstromnetz an. Dabei überschreitet $\overline{P}out_{Baj}$ ohne Berücksichtigung des Kraftwerks den Wert von $Pon$. Dies ist ein Hinweis darauf, dass für die Beibehaltung der nötigen Leistungsreserve eine weitere Leistungsquelle aktiviert werden muss. Damit dieses Signal in der Generatorsteuerung 6 gemäß Fig. 1 nicht unterdrückt wird, wird die Einspeisung von Leistung durch das Kraftwerk von der Steuervorrichtung 11 zurückgenommen. Im vorliegenden Fall wird die Einspeisung sogar auf null zurückgeführt. Dies ist gleichbedeutend damit, dass die Leistungsfähigkeit des Kraftwerks 8 nicht in die Leistungsreserve eingerechnet wird (was aber grundsätzlich erfolgen könnte). Durch das Überschreiten von $Pon$ und das entsprechende Aktivieren einer zusätzlichen Leistungsquelle 5 sinkt anschließend die mittlere Leistungsabgabe $\overline{P}out_{Baj}$ aller Leistungsquellen ab, so dass sie zu einem Zeitpunkt $t_2$ stabil niedriger als $Pon$ liegt (die dargestellten Leistungsverhältnisse entsprechen dem Fall, dass vor $t_1$ nur die Leistungsquelle 4, d. h. der Netzbildner 3, gemäß Fig. 1 aktiviert war, und die Leistungsquellensteuerung 6 nach $t_1$ eine der Leistungsquellen 5 aktiviert). Da die Leistungsreserve jetzt wieder ausreichend ist, kann jetzt wieder Leistung von dem Kraftwerk eingespeist werden, wie durch einen neu auftretenden Abstand 13 angedeutet ist. Zu einem Zeitpunkt $t_3$ geht die Leistungsaufnahme der Lasten in dem Wechselstromnetz zurück. Dieser Rückgang wird durch ein Zurücknehmen der von dem Kraftwerk eingespeisten Leistung im Wesentlichen kompensiert. So wird verhindert, dass $\overline{Pout}_{Baj}$ $Poff$ unterschreitet und eine der aktuell aktiven Leistungsquellen ausgeschaltet wird, weil alle Brennkraftgeneratoren für die gewünschte Reserveleistung benötigt werden. Zu einem Zeitpunkt $t_4$ ist die Leistungsaufnahme wieder auf ihr vorheriges Maß angestiegen, bevor sie zu einem Zeitpunkt $t_5$ weiter ansteigt, aber ohne erneut $Pon$ zu überschreiten. Dieser Anstieg wird, soweit es die Leistungsfähigkeit des Kraftwerks erlaubt, durch Einspeisung zusätzlicher Leistung von dem Kraftwerk kompensiert. Vollständig ist dies hier aber nicht möglich, so dass auch die nach der Kompensation verbleibende Leistung $\overline{Pout}_{Baj}$ (gestrichelte Linie) einen gewissen Anstieg zeigt. Bei $t_6$ ist die Leistungsaufnahme wieder auf ihren früheren Wert zurückgekehrt, bevor sie bei $t_7$ erneut ansteigt, diesmal etwas weniger als zwischen $t_5$ und $t_6$, so dass durch zusätzliche Einspeisung von Leistung von dem Kraftwerk $\overline{Pout}_{Baj}$ knapp oberhalb von $Poff$ gehalten werden kann. Bei $t_8$ ist wieder der vorherige Wert der Leistungsaufnahme erreicht, bis er bei $t_9$ einbricht, und zwar diesmal bis unter $Poff$. Dabei wird die Einspeisung von Leistung von dem Kraftwerk zurückgenommen, sobald $Poff$ unterschritten ist, um zu verhindern, dass auch Pmin unterschritten wird. Durch Unterschreiten von $Poff$ wird eine der bislang aktiven Leistungsquellen deaktiviert. Dadurch steigt $\overline{Pout}_{Baj}$ bis zu einem Zeitpunkt $t_{10}$ an, ab dem wieder erhebliche Leistung von dem Kraftwerk eingespeist werden kann, was durch den Abstand 13 angedeutet ist.

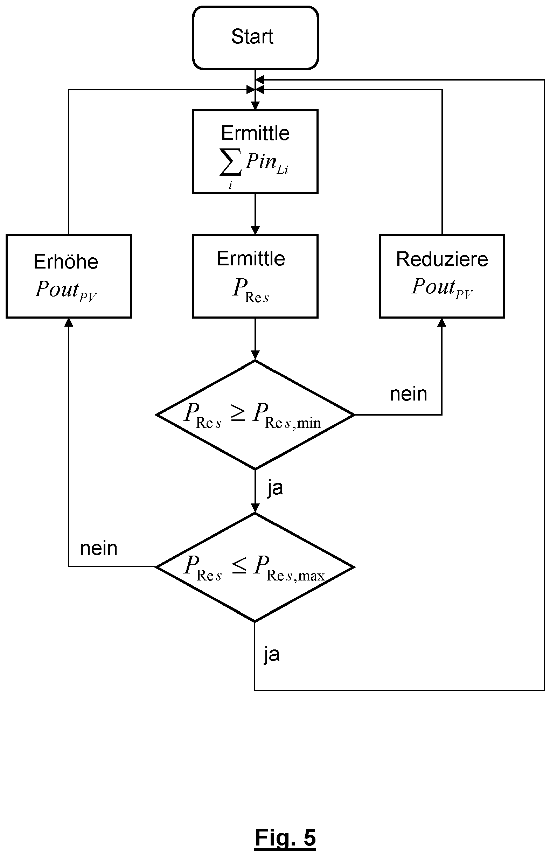

Die in **Fig. 5** durch ein Flussdiagramm skizzierte Routine, die von einer erfindungsgemäßen Steuervorrichtung 11 gemäß Fig. 1 ausgeführt werden kann, ist mit der anhand von Fig. 4 erläuterten Vorgehensweise nicht identisch, auch wenn es weitgehende Übereinstimmungen gibt. Die Routine beginnt damit, dass die gesamte Leistungsaufnahme aller Lasten 7 ermittelt wird. Dabei gilt:

$$\sum_i Pin_{Li} = Pout_{NB} + \sum_j Pout_{Baj} + Pout_{PV},$$

wobei $Pin_{Li}$ die Leistungsaufnahme der i-ten Last 7 ist, $Pout_{NB}$ die Leistungsausgabe des Netzbildners 3 ist, $Pout_{Baj}$ die Leistungsausgabe der aktivierten j-ten Leistungsquelle 5 ist und $Pout_{PV}$ die Leistungsausgabe des Kraftwerks 8 gemäß Fig. 1 ist.

Hierauf basierend wird im nächsten Schritt die aktuell in dem Wechselstromnetz 1 verfügbare Reserveleistung $P_{Res}$ ermittelt. Dies kann gemäß folgender Formel geschehen:

$$P_{Res} = P\max_{NB} + \sum_j P\max_{Baj} + s * P\max_{PV} - \sum_i Pin_{Li}.$$

Hier ist $Pmax_{NB}$ die maximale Leistungsfähigkeit des Netzbildners 3, $Pmax_{Baj}$ ist die maximale Leistungsfähigkeit der aktivierten j-ten Leistungsquelle, $Pmax_{PV}$ ist die maximale Leistungsfähigkeit des Kraftwerks, und $s$ ist ein Sicherheitsfaktor, der berücksichtigt, dass $Pmax_{PV}$ Schwankungen unterworfen ist, beispielsweise durch aufziehende Bewölkung.

Anschließend wird geprüft, ob $P_{Res}$ größer als eine gewünschte minimale Leistungsreserve $P_{Res,min}$ ist. Diese minimale Reserveleistung kann als konstanter Wert angesetzt werden. Bei der Vorgehensweise, wie sie anhand von Fig. 4 erläutert wurde, steigt die minimale Reserveleistung mit der Summe der Leistungsaufnahmen der einzelnen Lasten. Darüber hinaus kann es sinnvoll sein, in die minimale Reserveleistung einen Anteil der aktuellen Leistungsausgabe des Kraftwerks einfließen zu lassen, wenn dieses nahe seiner maximalen Leistungsfähigkeit betrieben wird. So kann $P_{Res,min}$ insbesondere durch die folgende Summe dargestellt werden:

$$P_{Res,min} = c + v * \sum_i Pin_{Li} + r * Pout_{PV}.$$

Hierbei ist $c$ eine Konstante, $v$ ist ein Variabilitätsfaktor, und $r$ ist ein Risikofaktor. $c$, $v$ und $r$ können auch null sein. Zumindest einer dieser Werte, vorzugsweise $c$ oder $v$ ist aber größer als null.

Wenn die aktuelle Reserveleistung die minimale Reserveleistung unterschreitet, wird, soweit aktuell Leistung $Pout_{PV}$ von dem Kraftwerk in das Wechselstromnetz eingespeist wird, diese Einspeisung soweit reduziert, dass die Leistungsquellensteuerung eine zusätzliche Leistungsquelle aktiviert. Dann wird der Verfahrensablauf erneut begonnen.

Ansonsten wird kontrolliert, dass die aktuell verfügbare Reserveleistung eine maximale Reserveleistung $P_{\text{Res,max}}$ nicht überschreitet. Dieses Überschreiten deutet an, dass aktuell zu viele Leistungsquellen aktiviert sind. Für den Wert der maximalen Reserveleistung $P_{\text{Res,max}}$ kann gelten:

$$P_{\text{Res,max}} = P_{\text{Res,min}} + k * P\max_{Baj}.$$

Hier ist $k$ ein Stabilisierungsfaktor, der größer als 1 ist, und $P\max_{Baj}$ ist die maximale Leistungsabgabe der j-ten Leistungsquelle, die bei Überschreiten von $P_{\text{Res,max}}$ deaktiviert würde. Mit diesem Deaktivieren würde die Reserveleistung genau um $P\max_{Baj}$ sinken. Der Stabilitätsfaktor $k$ stellt dabei sicher, dass aufgrund dieses Absinkens nicht sofort $P_{\text{Res,min}}$ unterschritten wird, denn dies hätte zur Folge, dass dieselbe Leistungsquelle sofort wieder angeschaltet würde usw.

Verschiedene Variationen des Verfahrens sind insbesondere in Bezug auf die Berücksichtigung der Leistungsfähigkeit des Kraftwerks möglich. So kann eine aktuell nicht ausgenutzte Leistungsfähigkeit des Kraftwerks in die Leistungsreserve eingerechnet werden; oder dies kann wegen der Unsicherheit, ob die Leistungsfähigkeit anhält, bewusst unterlassen werden. Selbst wenn die nicht ausgenutzte Leistungsfähigkeit des Kraftwerks nicht in die Leistungsreserve eingerechnet wird, kann es sinnvoll sein, die aktuell von dem Kraftwerk eingespeiste Leistung bei der Vorgabe der minimalen Reserveleistung zu berücksichtigen. Grund ist, dass auch diese Leistung wegbrechen kann, selbst wenn die Leistungsfähigkeit des Kraftwerks im Moment nicht voll ausgeschöpft wird. Die Art und Weise der Berücksichtigung kann auch von Wetterprognosen, der Jahreszeit, der Uhrzeit und/oder dem Standort des Kraftwerks abhängig gemacht werden.

## BEZUGSZEICHENLISTE

| | |
|---|---|
| 1 | Wechselstromnetz |
| 2 | Inselnetz |
| 3 | Netzbildner |
| 4 | Leistungsquelle |
| 5 | (weitere) Leistungsquelle |
| 6 | Leistungsquellensteuerung |
| 7 | Last |
| 8 | Kraftwerk |
| 9 | Photovoltaikgenerator |
| 10 | Wechselrichter |
| 11 | Steuervorrichtung |
| 12 | Abstand |
| 13 | Abstand |
| 21 | Betriebsbereich |
| 22 | Betriebsbereich |
| 23 | Betriebsbereich |
| 24 | Betriebsbereich |
| 25 | Betriebsbereich |
| 26 | Betriebsbereich |
| 27 | Betriebspunkt |
| 28 | Leistungsgrenze |
| $P_{\text{Res}}$ | aktuell verfügbare Reserveleistung |
| $P_{\text{Res,min}}$ | minimale Reserveleistung |
| $P_{\text{Res,max}}$ | maximale Reserveleistung |
| $Pin$ | aktuelle Leistungsaufnahme |
| $Pout_{PV}$ | aktuelle Leistungsabgabe des Kraftwerks |
| $P\max_{PV}$ | aktuelle Leistungsfähigkeit des Kraftwerks |
| $P\max_{Baj}$ | maximale Leistungsfähigkeit eines Brennkraftgenerators |
| $k$ | Stabilisierungsfaktor |
| $Pmin$ | Mindestleistungsabgabe eines Brennkraftgenerators |

**Patentansprüche**

1. Verfahren zum Betrieb eines Kraftwerks fluktuierender elektrischer Leistungsfähigkeit (8), das neben einem Wirkleistung (P) und Blindleistung (Q) abgebenden spannungsstellenden Netzbildner (3) und mindestens einer Last (7) an ein begrenztes Wechselstromnetz (1) angeschlossen ist,

   - wobei in der PQ-Ebene ein gewünschter geschlossener Betriebsbereich des Netzbildners definiert wird, in dem der Netzbildner auftretende Schwankungen einer Netzwechselspannung auf dem Wechselstromnetz (1) effizient auszuregeln vermag,
   **dadurch gekennzeichnet, dass** ein aktueller Betriebspunkt des Netzbildners (3) in der PQ-Ebene ermittelt wird, und
   eine Abgabe von Wirkleistung und Blindleistung durch das Kraftwerk (8) so gesteuert wird, dass der Betriebspunkt des Netzbildners (3) in dem gewünschten Betriebsbereich gehalten wird.

2. Verfahren nach Anspruch 1, **dadurch gekennzeichnet, dass**, solange der Betriebspunkt des Netzbildners (3) in dem gewünschten Betriebsbereich bleibt, die Einspeisung von Wirkleistung von dem Kraftwerk (8) maximiert wird.

3. Verfahren nach Anspruch 1 oder 2, **dadurch gekennzeichnet, dass** der Netzbildner (3) ein Wasserkraftgenerator oder ein Brennkraftgenerator oder ein Batterieinverter ist.

4. Verfahren nach einem der vorhergehenden Ansprüche, **dadurch gekennzeichnet, dass** mindestens eine an das begrenzte Wechselstromnetz (1) angeschlossene weitere Leistungsquelle (5) bedarfsweise aktiviert oder deaktiviert wird, um den Betriebspunkt des Netzbildners (3) in dem gewünschten Betriebsbereich zu halten, wobei insbesondere die mindestens eine weitere Leistungsquelle (5) ein Brennkraftgenerator ist.

5. Verfahren nach Anspruch 4, **dadurch gekennzeichnet, dass** die mindestens eine weitere Leistungsquelle (5) von einer Leistungsquellensteuerung (6) aktiviert und deaktiviert wird und dass die Einspeisung von Wirkleistung von dem Kraftwerk (8) soweit reduziert wird, dass die mindestens eine oder noch eine weitere Leistungsquelle (5) von der Leistungsquellensteuerung (6) aktiviert wird, wenn der Betriebspunkt des Netzbildners (3) den gewünschten Betriebsbereich nach außen verlässt, und wobei insbesondere die Einspeisung von Leistung von dem Kraftwerk (8) soweit erhöht wird, dass die mindestens eine oder die noch weitere Leistungsquelle (5) von der Leistungsquellensteuerung (6) deaktiviert wird, wenn der Betriebspunkt des Netzbildners (3) den gewünschten Betriebsbereich nach innen verlässt.

6. Verfahren nach einem der Ansprüche 4 bis 5, **dadurch gekennzeichnet, dass** eine aktuell in dem Wechselstromnetz (1) verfügbare Reserveleistung ($P_{Res}$) ermittelt wird, wobei nur aktivierte Leistungsquellen (4, 5) berücksichtigt werden, und dass dann, wenn die ermittelte Reserveleistung ($P_{Res}$) eine minimale Reserveleistung ($P_{Res,min}$) unterschreitet, die Einspeisung von Leistung von dem Kraftwerk (8) soweit reduziert wird, dass die mindestens eine oder noch eine weitere Leistungsquelle (5) von der Leistungsquellensteuerung (6) aktiviert wird, beziehungsweise dann, wenn die ermittelte Reserveleistung ($P_{Res}$) eine maximale Reserveleistung ($P_{Res,max}$) überschreitet, die Einspeisung von Leistung von dem Kraftwerk (8) soweit erhöht wird, dass die mindestens eine oder die noch weitere Leistungsquelle (5) von der Leistungsquellensteuerung (6) deaktiviert wird, wobei insbesondere die maximale Reserveleistung ($P_{Res,max}$) als Summe der minimalen Reserveleistung ($P_{Res,min}$) und der maximalen Leistungsfähigkeit der weiteren Leistungsquelle ($Pmax_{Baj}$), die die Generatorsteuerung (6) als ersten deaktivieren würde, mal einem Stabilisierungsfaktor ($k$) größer als 1 berechnet wird.

7. Verfahren nach Anspruch 3 und Anspruch 6, **dadurch gekennzeichnet, dass** dann, wenn die ermittelte Reserveleistung ($P_{Res}$) im Bereich zwischen der minimalen Reserveleistung ($P_{Res,min}$) und der maximalen Reserveleistung ($P_{Res,max}$) liegt, die Einspeisung von Leistung von dem Kraftwerk (8) nur solange maximiert wird, wie keine weitere Leistungsquelle (5) von der Leistungsquellensteuerung (6) deaktiviert wird.

8. Verfahren nach Anspruch 6 oder 7, **dadurch gekennzeichnet, dass** eine aktuelle Leistungsaufnahme ($Pin$) aller Lasten (7) in dem Wechselstromnetz (1) direkt und/oder als aktuelle Leistungsabgabe aller Leistungsquellen (4, 5, 8) erfasst wird, wobei insbesondere die minimale Reserveleistung ($P_{Res,min}$) und/oder die maximale Reserveleistung ($P_{Res,max}$) unter Verwendung eines Prozentsatzes der aktuellen Leistungsaufnahmen ($Pin$) aller Lasten (7) als Summand berechnet wird.

9. Verfahren nach einem der vorhergehenden Ansprüche, **dadurch gekennzeichnet, dass** eine aktuelle Leistungsabgabe ($Pout_{PV}$) und die aktuelle Leistungsfähigkeit ($Pmax_{PV}$) des Kraftwerks (8) erfasst werden.

10. Verfahren nach Anspruch 9 und einem der Ansprüche 6 bis 8, **dadurch gekennzeichnet, dass** die aktuell verfügbare Reserveleistung ($P_{Res}$) unter Berücksichtigung eines Prozentsatzes einer Differenz zwischen der aktuellen Leistungsfähigkeit ($Pmax_{PV}$) und der aktuellen Leistungsabgabe ($Pout_{PV}$) des Kraftwerks (8) festgelegt wird.

11. Verfahren nach Anspruch 9 oder 10, **dadurch gekennzeichnet, dass** die minimale Reserveleistung ($P_{Res,min}$) und/oder die maximale Reserveleistung ($P_{Res,max}$) unter Verwendung eines Prozentsatzes der aktuellen Leistungsabgabe ($Pout_{PV}$) des Kraftwerks (8) als Summand berechnet wird.

12. Verfahren nach mindestens einem der vorhergehenden Ansprüche, **dadurch gekennzeichnet, dass** eine längerfristige Unterschreitung einer Mindestleistungsabgabe ($P$min) und jede Unterschreitung einer Leistungsabgabe von null bei allen Leistungsquellen verhindert wird, indem die Einspeisung von Leistung von dem Kraftwerk (8) reduziert wird.

13. Steuervorrichtung (11) zur Steuerung eines Kraftwerks (8), das neben mindestens einem Wirkleistung (P) und Blindleistung (Q) abgebenden spannungsstellenden Netzbildner (3) und mindestens einer Last (7) an ein begrenztes Wechselstromnetz (1) anschließbar ist, **dadurch gekennzeichnet, dass** die Steuervorrichtung (11) zur Ausführung eines Verfahrens nach einem der vorhergehenden Ansprüche ausgebildet ist.

14. Steuervorrichtung (11) nach Anspruch 13 mit mindestens einer weiteren Leistungsquelle (5), wobei das mindestens eine weitere, Leistung abgebende Betriebsmittel bedarfsweise aktiviert oder deaktiviert wird.

15. Photovoltaikkraftwerk mit einer Steuervorrichtung (11) nach einem der Ansprüche 13 und 14.

**Claims**

1. A method for operating a power station (8) of fluctuating electrical capacity that, besides a voltage-setting system former (3) outputting active power (P) and reactive power (Q) and at least one load (7), is connected to a limited AC grid (1),

   - wherein a desired self-contained operating range of the system former is defined on the PQ level, in which operating range the system former is able to efficiently correct fluctuations arising in a mains voltage of the AC grid (1),
   - **characterized in that** a present operating point of the system former (3) on the PQ level is ascertained, and
   - wherein an output of active power and reactive power by the power station (8) is controlled such that the operating point of the system former (3) is kept in the desired operating range.

2. The method as claimed in claim 1, **characterized in that** while the operating point of the system former remains in the desired operating range, the supply of active power by the power station is maximized.

3. The method as claimed in claim 1 or 2, **characterized in that** the system former (3) is a hydroelectric generator or a combustion generator or a battery inverter.

4. The method as claimed in one of the preceding claims, **characterized in that** at least one further power source (5) connected to the limited AC grid (1) is activated or deactivated as required in order to keep the operating point of the system former (3) in the desired operating range, wherein in particular the at least one further power source (5) is a combustion generator.

5. The method as claimed in claim 4, **characterized in that** the at least one further power source (5) is activated and deactivated by a power source controller (6) and **in that** the supply of active power by the power station (8) is reduced until the at least one or another further power source (5) is activated by the power source controller (6) when the operating point of the system former (3) leaves the desired operating range for the outside, and wherein in particular the supply of power by the power station (8) is increased until the at least one or the still further power source (5) is deactivated by the power source controller (6) when the operating point of the system former (3) leaves the desired operating range for the inside.

6. The method as claimed in claim 4 or claim 5, **characterized in that** a reserve power ($P_{Res}$) currently available in the AC grid (1) is ascertained, wherein only activated power sources (4, 5) are taken into consideration, and **in that** when the ascertained reserve power ($P_{Res}$) drops below a minimum reserve power ($P_{Res,min}$), the supply of power by the power station (8) is reduced until the at least one or another further power source (5) is activated by the power source controller (6), respectively when the ascertained reserve power ($P_{Res}$) exceeds a maximum reserve power ($P_{Res,max}$), the supply of power by the power station (8) is increased until the at least one or the still further power source (5) is deactivated by the power source controller (6), wherein in particular the maximum reserve power ($P_{Res,max}$) is computed as a sum of the minimum reserve power ($P_{Res,min}$) and the maximum capacity of the further power source ($Pmax_{Baj}$), which the generator controller (6) would deactivate first, times a stabilization factor ($k$) greater than 1.

7. The method as claimed in claim 3 and claim 6, **characterized in that**,
when the ascertained reserve power ($P_{Res}$) is in the range between the minimum reserve power ($P_{Res,min}$) and the maximum reserve power ($P_{Res,max}$), the supply of power by the power station (8) is maximized only for as long as no further power source (5) is deactivated by the power source controller (6).

8. The method as claimed in claim 6 or 7, **characterized in that** a present power consumption ($Pin$) of all loads (7) in the AC grid (1) is detected directly and/or as a present power output of all power sources (4, 5, 8), wherein in particular the minimum reserve power ($P_{Res,min}$) and/or the maximum reserve power ($P_{Res,max}$) is/are computed using a percentage of the present power consumptions ($Pin$) of all loads (7) as a summand.

9. The method as claimed in one of the preceding claims, **characterized in that** a present power output ($Pout_{PV}$) and the present capacity ($Pmax_{PV}$) of the power station (8) are detected.

10. The method as claimed in claim 9 and one of the claims 6 to 8, **characterized in that** the currently available reserve power ($P_{Res}$) is stipulated by taking into consideration a percentage of a difference between the present capacity ($Pmax_{PV}$) and the present power output ($Pout_{PV}$) of the power station (8).

11. The method as claimed in claim 9 or 10, **characterized in that** the minimum reserve power ($P_{Res,min}$) and/or the maximum reserve power ($P_{Res,max}$) is/are computed using a percentage of the present power output ($Pout_{PV}$) of the power station (8) as a summand.

12. The method as claimed in at least one of the preceding claims, **characterized in that** a longer-term drop below a minimum power output ($Pmin$) and any drop below a power output of zero is prevented for all power sources by reducing the supply of power by the power station (8).

13. A control apparatus (11) for controlling a power station (8) that, besides at least one voltage-setting system former (3) outputting active power (P) and reactive power (Q) and at least one load (7), is connectable to a limited AC grid (1), **characterized in that** the control apparatus (11) is configured to perform a method as claimed in one of the preceding claims.

14. A control apparatus (11) as claimed in claim 13, comprising at least one further power source (5), wherein the at least one further resource outputting power is activated or deactivated as required.

15. A photovoltaic power station having a control apparatus (11) as claimed in one of claims 13 and 14.

**Revendications**

1. Procédé destiné au fonctionnement d'une centrale électrique de capacité de puissance (8) électrique fluctuante qui, outre à un formateur de réseau (3) établissant une tension délivrant une puissance active (P) et une puissance réactive (Q) et à au moins une charge (7), est raccordée à un réseau de courant alternatif (1) limité,

- une plage de fonctionnement fermée souhaitée du formateur de réseau étant définie dans le plan PQ, dans laquelle le formateur de réseau peut réguler efficacement la survenue de fluctuations d'une tension alternative de réseau sur le réseau de courant alternatif (1),
**caractérisé en ce qu'**un point de fonctionnement actuel du formateur de réseau (3) dans le plan PQ est déterminé , et

une délivrance de puissance active et de puissance réactive par la centrale électrique (8) est commandée de telle sorte que le point de fonctionnement du formateur de réseau (3) est maintenu dans la plage de fonctionnement souhaitée.

2. Procédé selon la revendication 1, **caractérisé en ce que** l'injection de puissance active par la centrale électrique (8) est maximisée tant que le point de fonctionnement du formateur de réseau (3) demeure dans la plage de fonctionnement souhaitée.

3. Procédé selon la revendication 1 ou 2, **caractérisé en ce que** le formateur de réseau (3) est un générateur hydraulique ou un générateur à combustion interne ou un onduleur à batterie.

4. Procédé selon l'une des revendications précédentes, **caractérisé en ce qu'**au moins une autre source de puissance (5) connectée au réseau de courant alternatif (1) limité est activée ou désactivée en cas de besoin pour maintenir le point de fonctionnement du formateur de réseau (3) dans la plage de fonctionnement souhaitée, l'autre source de puissance (5) au moins au nombre de un étant en particulier un générateur à combustion interne.

5. Procédé selon la revendication 4, **caractérisé en ce que** l'autre source de puissance (5) au moins au nombre de un est activée et désactivée par une commande de source de puissance (6), et **en ce que** l'injection de puissance active par la centrale électrique (8) est réduite au point que la source de puissance au moins au nombre de un ou encore une autre source de puissance (5) est activée par la commande de source de puissance (6) quand le point de fonctionnement du formateur de réseau (3) quitte vers l'extérieur la plage de fonctionnement souhaitée, et en particulier l'injection de puissance par la centrale électrique (8) est augmentée au point que la source de puissance au moins au nombre de un ou encore l'autre source de puissance (5) est désactivée par la commande de source de puissance (6) quand le point de fonctionnement du formateur de réseau (3) quitte vers l'intérieur la plage de fonctionnement souhaitée.

6. Procédé selon l'une des revendications 4 à 5, **caractérisé en ce qu'**une puissance de réserve ($P_{Res}$) actuellement disponible dans le réseau de courant alternatif (1) est déterminée, seules des sources de puissance (4, 5) activées étant prises en compte, et **en ce que**, quand la puissance de réserve ($P_{Res}$) déterminée passe au-dessous d'une puissance de réserve minimale ($P_{Res,min}$), l'injection de puissance par la centrale électrique (8) est réduite au point que la source de puissance au moins au nombre de un ou encore l'autre source de puissance (5) est activée par la commande de source de puissance (6), ou respectivement quand la puissance de réserve ($P_{Res}$) déterminée passe au-dessus d'une puissance de réserve maximale ($P_{Res,max}$) , l'injection de puissance par la centrale électrique (8) est augmentée au point que la source de puissance au moins au nombre de un ou encore l'autre source de puissance (5) est désactivée par la commande de source de puissance (6), en particulier la puissance de réserve maximale ($P_{Res,max}$) étant calculée en tant que somme de la puissance de réserve minimale ($P_{Res,min}$) et de la capacité de puissance maximale de l'autre source de puissance ($Pmax_{Baj}$) qui désactiverait en premier la commande de source de puissance (6), multipliée par un facteur de stabilisation ($k$) supérieur à 1.

7. Procédé selon la revendication 3 et la revendication 6, **caractérisé en ce que**, quand la puissance de réserve ($P_{Res}$) déterminée se situe dans la plage entre la puissance de réserve minimale ($P_{Res,min}$) et la puissance de réserve maximale ($P_{Res,max}$), l'injection de puissance par la centrale électrique (8) est maximisée seulement tant qu'aucune autre source de puissance (5) n'est désactivée par la commande de source de puissance (6).

8. Procédé selon la revendication 6 ou 7, **caractérisé en ce qu'**une puissance absorbée ($Pin$) actuelle de toutes les charges (7) dans le réseau de courant alternatif (1) est détectée directement et/ou en tant que puissance débitée actuelle de toutes les sources de puissance (4, 5, 8), en particulier la puissance de réserve minimale ($P_{Res,min}$) et/ou la puissance de réserve maximale ($P_{Res,max}$) étant calculée en tant que terme de la somme en utilisant un pourcentage des puissances absorbées ($Pin$) actuelles de toutes les charges (7).

9. Procédé selon l'une des revendications précédentes, **caractérisé en ce qu'**une puissance débitée ($Pout_{PV}$) actuelle et la capacité de puissance ($Pmax_{pv}$) actuelle de la centrale électrique (8) sont détectées.

10. Procédé selon la revendication 9 et l'une des revendications 6 à 8, **caractérisé en ce que** la puissance de réserve ($P_{Res}$) actuellement disponible est stipulée en prenant en compte un pourcentage d'une différence entre la capacité de puissance ($Pmax_{pv}$) actuelle et la puissance débitée ($Pout_{PV}$) actuelle de la centrale électrique (8).

11. Procédé selon la revendication 9 ou 10, **caractérisé en ce que** la puissance de réserve minimale ($P_{Res,min}$) et/ou la puissance de réserve maximale ($P_{Res,max}$) est calculée en tant que terme de la somme en utilisant un pourcentage de la puissance débitée ($Pout_{PV}$) actuelle de la centrale électrique (8).

12. Procédé selon au moins l'une des revendications précédentes, **caractérisé en ce qu'**un passage durable au-dessous d'une puissance débitée minimale (Pmin) et chaque passage au-dessous d'une puissance débitée de zéro sont empêchés pour toutes les sources de puissance par le fait que l'injection de puissance par la centrale électrique (8) est réduite.

13. Dispositif de commande (11) destiné à la commande d'une centrale électrique (8) qui, outre à au moins à un formateur de réseau (3) établissant une tension fournissant une puissance active (P) et une puissance réactive (Q) et à au moins une charge (7), peut être raccordée à un réseau de courant alternatif (1) limité, **caractérisé en ce que** le dispositif de commande (11) est constitué pour la réalisation d'un procédé selon l'une des revendications précédentes.

14. Dispositif de commande (11) selon la revendication 13, avec au moins une autre source de puissance (5), l'autre moyen de fonctionnement au moins au nombre de un qui délivre la puissance étant en cas de besoin activé ou désactivé.

15. Centrale électrique photovoltaïque avec un dispositif de commande (11) selon l'une des revendications 13 et 14.

**Fig. 1**

**Fig. 2**

```
        ┌─────────────┐
        │             │
        │    Start    │
        │             │
        └──────┬──────┘
               │
               ▼
        ┌─────────────┐
        │  Definiere  │
        │ gewünschten │
        │Betriebsbereich 26│
        └──────┬──────┘
               │
               ▼
        ┌─────────────┐
        │  Ermittle   │
        │  aktuellen  │
        │Arbeitspunkt 27│
        └──────┬──────┘
               │
               ▼
          ◇ Ist          ja    ┌──────────────┐
            27 in 26  ─────────▶│ Steigere P des│
          ◇                     │ PV-Kraftwerks │
               │                └──────────────┘
             nein
               │
               ▼
        ┌─────────────┐
        │   Ändere P  │
        │ und/oder Q  │
        │des PV-Kraftwerks│
        └─────────────┘
```

**Fig. 3**

20

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011103600 A1
- DE 102010046744 A1
- DE 102011106877 A1
- EP 1323222 B1
- US 20080278003 A1
- EP 2503146 A1

**In der Beschreibung aufgeführte Nicht-Patentliteratur**

- **C.A. HERNANDEZ-ARAMBURO et al.** Fuel Consumption Minimization of a Microgrid. *IEEE Transactions on Industry Applications,* Mai 2005, vol. 41 (3), 673-681
- **MENDIS et al.** A Novel Control Strategy for Stand-Alone Operation of a Wind Dominated RAPS System. *IEEE Industry Application Society Annual Meeting,* 2011